# DEMANDE DE BREVET EUROPEEN

(11) **EP 0 849 107 A1**
(43) Date de publication de la demande: **24.06.1998**
(21) Numéro de dépôt: 97402860.7
(22) Date de dépôt: 27.11.1997
(51) Int. Cl.: B60J 10/00

(54) **Pièce en caoutchouc telle par exemple qu'un joint d'étanchéité et son procédé de traitement**

(30) Priorité: 17.12.1996 FR 9615491
(71) Demandeur: HUTCHINSON, F-75008 Paris (FR)
(72) Inventeur: Marcilloux, Jérôme, 77210 Avon (FR)
(74) Mandataire: Ramey, Daniel

(57) **Abrégé**

L'invention concerne une pièce (10) en caoutchouc, telle qu'un joint d'étanchéité pour vitrage coulissant de véhicule automobile, comprenant une lèvre d'étanchéité (16) dont au moins la partie destinée à venir au contact de la vitre (18) comporte un film (20) d'un terpolymère d'éthylène, d'acrylate ou de méthacrylate et d'acide acrylique ou méthacrylique contenant des charges de coloration ou des charges lamellaires permettant de réduire notablement les frottements sur la vitre (18) et d'éviter la production de crissements.

## Description

L'invention concerne une pièce en caoutchouc, telle par exemple qu'un joint d'étanchéité, comportant sur au moins une partie de sa surface une couche mince d'une matière d'aspect ou de réduction des frottements et concerne aussi un procédé de traitement d'une telle pièce.

Des pièces de ce type sont utilisées dans de nombreux domaines industriels et notamment dans le bâtiment et dans l'industrie automobile pour former des joints de vitrage glissant.

On a cherché depuis longtemps à diminuer le frottement de ces pièces ou de ces joints sur les vitres et à réduire les bruits (crissements) que génère ce frottement dans certains cas. Il est par ailleurs souvent souhaitable d'adapter la couleur de ces pièces à leur environnement.

Les solutions les plus connues consistent à déposer sur ces pièces des vernis d'aspect ou de réduction des frottements et des bruits, mais qui présentent au moins l'un des inconvénients suivants :
- difficultés de mise en oeuvre qui rendent leur application délicate sur des pièces de forme particulière ou complexe,
- mauvaise tenue au vieillissement (sous l'effet de la température, du rayonnement ultra-violet etc...),
- mauvaise tenue à l'eau et à certains produits (éthanol, glycol etc...),
- réduction insuffisante des frottements et des bruits.

Une autre solution très utilisée pour réduire les frottements consiste à déposer un floc sur la surface de la pièce venant au contact du vitrage, ce qui permet en outre d'éviter la formation de rayures sur le vitrage en présence de poussières mais qui a souvent pour inconvénient de produire des crissements bruyants en présence d'eau en cours d'évaporation.

L'invention a pour but d'apporter une solution simple et efficace à ces problèmes en évitant les inconvénients précités des solutions connues.

Elle propose à cet effet une pièce en caoutchouc, telle par exemple qu'un joint d'étanchéité, comprenant sur au moins une partie de sa surface une couche mince d'une matière d'aspect ou de réduction des frottements, caractérisée en ce que ladite matière est un polymère à base d'éthylène et d'au moins un dérivé acrylique ou méthacrylique formant un film souple adhérant au caoutchouc de ladite pièce et contenant des charges de coloration ou lamellaires telles que du graphite, du disulfure de molybdène, du talc ou du mica.

Ce film permet de modifier la couleur ou de réduire d'un facteur 3 à 5 environ le coefficient de frottement d'un caoutchouc apolaire tel qu'un EPDM sur un vitrage. Il a de plus une bonne tenue au vieillissement et une bonne résistance à l'eau et aux agressions chimiques par des produits du type éthanol ou glycol.

L'invention prévoit également d'ajouter à ladite matière des charges de renforcement telles par exemple que du dioxyde de titane, du graphite, du noir de carbone, de la silice ou du sulfure de molybdène permettant d'améliorer ses caractéristiques mécaniques. Les charges de coloration peuvent être des charges blanches ou claires telles que du dioxyde de titane, de la silice ou de la craie, associées à un colorant.

Dans un exemple préféré de réalisation de l'invention, cette matière comprend essentiellement un terpolymère d'éthylène, d'acrylate ou de méthacrylate et d'acide acrylique ou méthacrylique, tel que ceux commercialisés par EXXON CHEMICAL sous les dénominations Escor ATX 350, 325 et 320 et par DU PONT DE NEMOURS sous la dénomination VAMAC.

Une telle matière contenant des charges lamellaires permet quand elle est déposée sur une pièce en élastomère tel qu'un EPDM, de réduire d'un facteur 5 environ son coefficient de frottement sur un vitrage et de supprimer complètement les crissements. Elle peut aussi être déposée sur un floc en polyamide ou en polyester, avec les mêmes résultats.

L'invention propose également un procédé de traitement d'une pièce en caoutchouc du type décrit dans ce qui précède, ce procédé étant caractérisé en ce qu'il consiste à réaliser une solution ou une dissolution de ladite matière dans un solvant, à déposer une couche mince de cette solution ou dissolution sur au moins une partie de la surface de ladite pièce et à laisser évaporer le solvant.

Avantageusement, on dépose la solution ou dissolution sur la pièce au pinceau, par pulvérisation ou par trempage, ce qui permet, si on le souhaite, de déposer une couche mince ou un film de cette matière sur toute la surface de la pièce même lorsque celle-ci est de forme particulière ou complexe.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
les figures 1 et 2 sont des vues schématiques en coupe transversale de joints d'étanchéité auxquels l'invention est applicable ;
la figure 3 représente des courbes de niveaux sonores de joints selon la technique antérieure et de joints selon l'invention, en fonction de leur compression.

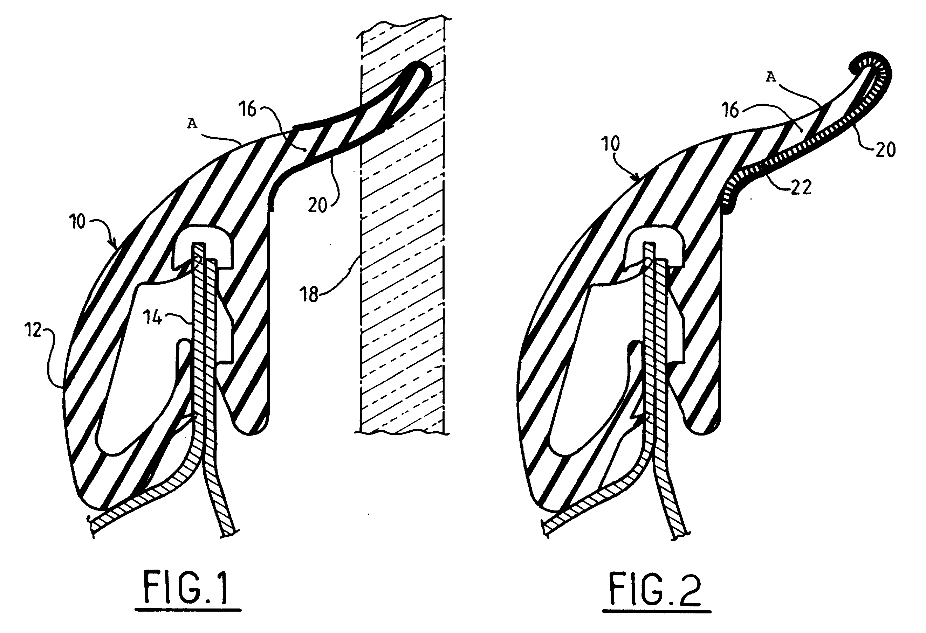

Le joint représenté en figure 1 est typiquement un joint lécheur utilisé dans l'industrie automobile pour assurer l'étanchéité des vitres mobiles des portes des véhicules.

Ce joint désigné par la référence 10 est un profilé réalisé par extrusion d'un caoutchouc apolaire tel qu'un EPDM, un caoutchouc naturel, un EPR, un polybutadiène ou leurs dérivés apolaires, et comprend une partie 12 formant pince de montage sur un cadre 14 et une lèvre souple d'étanchéité 16 destinée à être appliquée sur une face d'une vitre mobile 18 (représentée en trait fantôme) montée coulissante par rapport au cadre 14.

L'appui élastique de la lèvre 16 sur la vitre 18 permet d'assurer l'étanchéité à l'eau et aux poussières.

Comme indiqué plus haut, un premier aspect de l'invention concerne la réduction des frottements de la lèvre d'étanchéité 16 sur la vitre 18 et des crissements qui peuvent résulter de ces frottements.

Pour cela, l'invention prévoit de déposer sur toute la surface du joint 10 ou au moins sur la partie de la lèvre 16 destinée à venir au contact de la vitre 18, une couche mince ou un film 20 d'un copolymère à base d'éthylène et d'au moins un monomère acrylique ou méthacrylique, contenant des charges lamellaires telles que du graphite, du disulfure de molybdène, du talc, du mica, etc... qui sont uniformément dispersées dans le copolymère.

L'épaisseur du film va être par exemple de l'ordre de 5 à 10 µm et la quantité de charges lamellaires qu'il contient est par exemple de l'ordre de 100 à 250 parties en poids, de préférence de 100 à 150 parties en poids, pour 100 parts en poids de polymère.

Dans un mode de réalisation préféré de l'invention, le film 20 est formé à partir d'un terpolymère d'éthylène, d'acrylate ou de méthacrylate et d'acide acrylique ou méthacrylique.

Des produits de ce type sont commercialisés par la Société EXXON CHEMICAL sous les dénominations Escor ATX 350, 325 et 320 et par la Société DU PONT DE NEMOURS sous la dénomination VAMAC.

Un tel polymère présente une bonne adhérence à des caoutchoucs apolaires tel qu'un caoutchouc naturel, un EPDM, un EPR, un polybutadiène, et leurs dérivés apolaires. L'acrylate ou le méthacrylate qu'il contient a des propriétés filmogènes et assure un bon recouvrement du caoutchouc.

La fonction acide (acide acrylique ou méthacrylique) favorise la dispersion des charges dans le polymère.

Il est avantageux également d'ajouter des charges de renforcement telles que du dioxyde de titane, du graphite, du noir de carbone de la silice ou du sulfure de molybdène par exemple, à ce polymère pour améliorer ses caractéristiques mécaniques, réduire son usure et augmenter sa durée de vie dans l'application à des joints de vitrage coulissant.

Le polymère précité peut être utilisé seul ou en coupage avec d'autres élastomères tels que polyisoprène, polybutadiène, caoutchouc naturel, polychloroprène, caoutchouc nitrile, nitrile hydrogéné, nitrile carboxylé, caoutchouc butyle, EPDM, etc..., pour améliorer son adhérence sur les élastomères cités, et/ou certaines de ses caractéristiques telles que la résistance aux solvants, à l'abrasion, au vieillissement, etc...

Selon un autre aspect de l'invention, le polymère précité, tel qu'il vient d'être décrit, peut également être utilisé pour former une couche d'aspect ou de coloration sur le joint ou la pièce en caoutchouc. Pour cela, on ajoute au polymère des charges blanches ou claires, telles que du dioxyde de titane, de la silice, de la craie, etc..., qui sont associées à un colorant. Cette couche mince est déposée au moins sur les surfaces du joint qui sont visibles après montage, par exemple sur la surface désignée par la référence A aux figures 1 et 2, qui s'étend de la lèvre d'étanchéité 16 jusqu'au niveau du support 14.

Le traitement d'un joint en caoutchouc conforme à l'invention est le suivant :

Le polymère (tel que le terpolymère précité d'éthylène, d'acrylate ou de méthacrylate et d'acide acrylique ou méthacrylique) contenant les charges précitées est mis en suspension en phase solvant et est appliqué sur tout ou partie du joint 10 par pulvérisation au pistolet ou par trempage ou encore au moyen d'un pinceau.

Par évaporation du solvant, le polymère reste à la surface du joint 10 et forme un vernis souple adhérant fortement au caoutchouc du joint.

On peut améliorer l'aspect d'un vernis à base de coupages d'élastomères au moyen d'un plastifiant (en quantité comprise entre 2 et 5%, de préférence 2 à 3% en poids par rapport au solvant), le ou les plastifiants étant compatibles avec les élastomères utilisés.

Le solvant utilisé peut être du toluène, du xylène ou du tétrahydrofuranne (THF).

Les charges peuvent être d'abord mélangées au polymère, puis on peut dissoudre le mélange polymère plus charges dans le solvant (on réalise alors une dissolution).

En variante on peut dissoudre le polymère dans le solvant, puis ajouter les charges et les disperser dans la solution ainsi obtenue.

On peut utiliser des agents de dispersion (acide gras, sodium dodecyl sulfate, agents tensioactifs) dans une quantité de 0 à 1%, de préférence 0 à 0,5% % en poids par rapport au solvant, lorsque les charges précitées sont non dispersibles dans le polymère précité. On a alors des granulométries de charges comprises entre 5 et 100 µm environ.

Eventuellement, le polymère peut être réticulé (de façon classique, en utilisant de 0,5 à 1% environ d'agents de réticulation tels que des amines, des résines formolphénoliques ou des peroxydes organiques et en chauffant à une température de l'ordre de 150°C environ) pour améliorer ses caractéristiques mécaniques et notamment réduire le fluage.

En outre, le joint 10 peut être chauffé préalablement au dépôt du film de polymère 20, pour améliorer l'adhérence du polymère sur le joint, ou après ce dépôt, pour évaporation et éventuellement réticulation.

Des essais ont été réalisés avec des joints 10 en EPDM ne comprenant pas de film de polymère 20 sur leur surface venant au contact de la vitre 18, avec des joints 10 en EPDM comprenant sur cette surface un film 20 de terpolymère précité ne contenant pas de charges lamellaires et avec des joints 10 comprenant sur leur lèvre d'étanchéité 16 un film 20 de terpolymère contenant des charges lamellaires.

Les coefficients de frottement sur la vitre ont été, respectivement, de 2,4 dans le premier cas, de 1,5 dans le deuxième cas et de 0,4 dans le troisième cas (les charges lamellaires étant du graphite) ou de 0,7 (les charges lamellaires étant du disulfure de molybdène).

On a également vérifié que le film 20 déposé sur le joint 10 dans le troisième cas ne produisait aucun crissement sur la vitre, même après un très grand nombre de cycle de manoeuvres de la vitre.

Il a également été vérifié que ce film 20 résistait bien à des agressions chimiques par l'eau, l'éthanol et le glycol et qu'il avait une bonne tenue au vieillissement sous l'effet de l'oxygène, de l'ozone et des rayons ultra-violets.

Dans la variante de réalisation représentée schématiquement en figure 2, la lèvre 16 du joint 10 comporte, sur sa surface susceptible de venir au contact de la vitre 18, un floc 22 formé d'un revêtement à base de fibres courtes, généralement en polyamide ou en polyester.

De façon bien connue dans la technique, ce revêtement permet de réduire les frottements sur la surface de la vitre 18 et d'éviter la formation de rayures provoquées par des poussières présentes à l'interface entre la lèvre 16 et la vitre 18.

On a cependant constaté que le floc 22 pouvait provoquer des crissements assez importants sur la vitre 18, notamment lorsque la géométrie de la lèvre n'est pas absolument parfaite.

L'invention prévoit de déposer alors un film 20 du polymère précité sur le floc 22.

Comme indiqué pour le mode de réalisation de la figure 1, ce polymère est de préférence un terpolymère d'éthylène, d'acrylate ou de méthacrylate et d'acide acrylique ou méthacrylique, contenant une dispersion de charges lamellaires. Le floc étant en matériau polaire, c'est alors la fonction acrylate du terpolymère qui assure l'adhérence au floc.

On a constaté que ce film de polymère 20 déposé par pulvérisation au pistolet, par trempage ou au pinceau, s'appliquait bien sur la surface du floc 22 et permettait de réduire notablement le coefficient de frottement sur la vitre 18 et d'éviter la production de crissements.

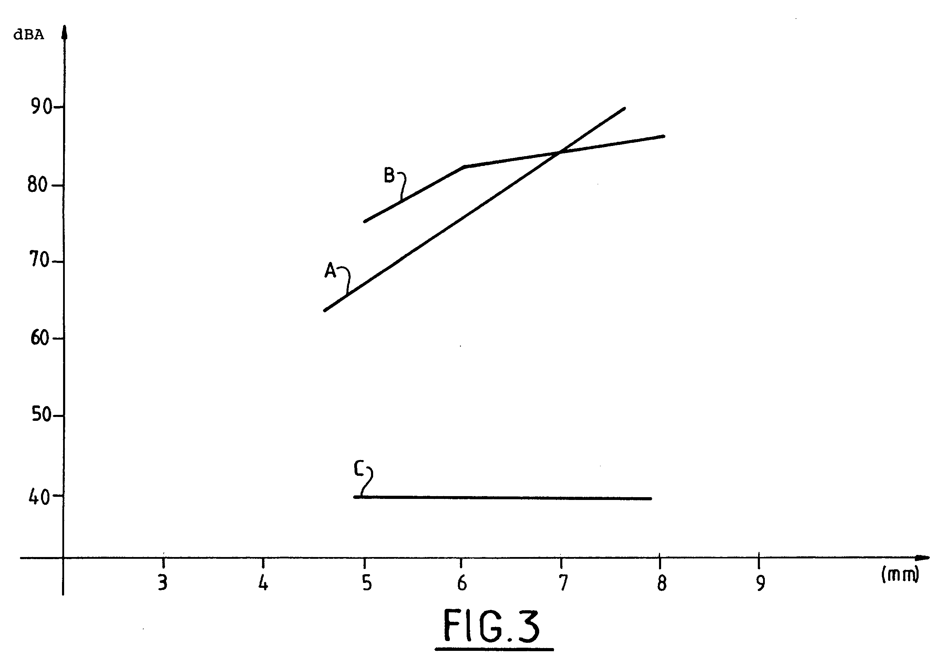

La figure 3 représente des courbes de niveaux sonores (en dBA) sur une vitre de joints selon la technique antérieure et de joints selon l'invention en fonction de la compression des joints (en mm), la courbe A représentant le niveau sonore (crissement) d'un joint de la technique antérieure non floqué, la courbe B représentant le niveau sonore d'un joint selon la technique antérieure muni d'un floc, et la courbe C le niveau sonore des joints selon l'invention, floqués ou non-floqués, le niveau sonore de la courbe C correspondant au bruit de fond ou bruit ambiant du local de mesure, ce qui signifie que le frottement des joints selon l'invention sur une vitre ne produit pas de bruit mesurable par rapport au bruit ambiant, et que l'invention permet de réduire de 40 dBA environ le niveau de bruit produit par un joint sur une vitre.

On a également vérifié que les autres propriétés du floc étaient conservées (empêcher la formation de rayures, longue durée de vie).

De façon générale, l'invention est applicable non seulement à des joints d'étanchéité tels que ceux qui viennent d'être décrits, mais aussi à toutes les pièces en caoutchouc ou en élastomère qui sont déplacées en contact glissant sur un support ou sur une autre pièce, lors de leur montage ou au cours de leur utilisation normale et/ou qui doivent être colorées.

## Revendications

1. Pièce en caoutchouc, telle par exemple qu'un joint d'étanchéité, comprenant sur au moins une partie de sa surface une couche mince d'une matière d'aspect ou de réduction des frottements, caractérisée en ce que ladite matière est un copolymère à base d'éthylène et d'au moins un dérivé acrylique ou méthacrylique formant un film souple adhérant au caoutchouc de ladite pièce et contenant une dispersion de charges de coloration ou lamellaires, telles par exemple que du graphite, du disulfure de molybdène, du talc ou du mica.

2. Pièce selon la revendication 1, caractérisée en ce qu'elle est en un caoutchouc apolaire tel qu'un caoutchouc naturel, un EPDM, un EPR, un polybutadiène ou leurs dérivés apolaires.

3. Pièce selon la revendication 1 ou 2, caractérisée en ce que ladite matière contient des charges de renforcement telles par exemple que du dioxyde de titane, du graphite, du noir de carbone, de la silice ou du sulfure de molybdène.

4. Pièce selon une des revendications 1 à 3, caractérisée en ce que ladite matière contient des charges blanches ou claires telles que du dioxyde de titane, de la silice ou de la craie, associées à un colorant.

5. Pièce selon une des revendications précédentes, caractérisée en ce que ladite matière est à base d'un terpolymère d'éthylène, d'acrylate ou de méthacrylate et d'acide acrylique ou méthacrylique.

6. Pièce selon une des revendications précédentes, caractérisée en ce que ladite matière comprend également au moins un autre élastomère tel que polyisoprène, polybutadiène, caoutchouc naturel, polychloroprène, caoutchouc nitrile, nitrile hydrogéné ou nitrile carboxylé, caoutchouc butyle, EPDM.

7. Pièce selon l'une des revendications précédentes, caractérisée en ce que ladite matière comprend un plastifiant et/ou un agent de dispersion des charges de renforcement.

8. Pièce selon l'une des revendications 1 à 7, caractérisée en ce que ladite matière est réticulée.

9. Pièce selon l'une des revendications précédentes, caractérisée en ce qu'elle comprend un floc (22), en particulier à base de polyamide ou de polyester et en ce que ladite matière recouvre le floc.

10. Procédé de traitement d'une pièce en caoutchouc du type décrit dans l'une des revendications précédentes, caractérisé en ce qu'il consiste à réaliser une solution ou une dissolution de ladite matière contenant des charges précitées dans un solvant, à déposer un film ou une couche mince de cette solution ou dissolution sur au moins une partie de la surface de ladite pièce et à laisser évaporer le solvant.

11. Procédé selon la revendication 10, caractérisé en ce qu'on dépose la solution ou dissolution sur la pièce par pulvérisation, par trempage ou au pinceau.

12. Procédé selon la revendication 10 ou 11, caractérisé en ce que le solvant est du toluène, du xylène ou du THF (tétrahydrofuranne).

13. Procédé selon l'une des revendications 10 à 12, caractérisé en ce qu'on chauffe ladite pièce avant le dépôt du film ou de la couche mince de solution ou de dissolution, ou après dépôt pour évaporation et éventuellement réticulation.
